# EUROPÄISCHE PATENTANMELDUNG

(11) **EP 4 796 714 A1**
(43) Veröffentlichungstag der Anmeldung: **26.08.2026**
(21) Anmeldenummer: 25158875.2
(22) Anmeldetag: 19.02.2025
(51) Int. Cl.: E02D 27/44, B23Q 1/01, B23Q 1/00, B24B 41/02

(54) **VERFAHREN ZUR HERSTELLUNG EINER LAGERUNG VON WERKZEUGMASCHINEN UND ENTSPRECHENDES LAGERSYSTEM**

(71) Anmelder: Heinrich Georg GmbH Maschinenfabrik, 57223 Kreuztal (DE)
(72) Erfinder: Wittrock, Matthias, 57078 Siegen (DE)
(74) Vertreter: Moser Götze & Partner Patentanwälte mbB

(57) **Zusammenfassung**

Verfahren zur Herstellung einer Lagerung von Werkzeugmaschinen, wobei die Werkzeugmaschine, insbesondere Walzenschleifmaschine, auf einem Maschinenbett verschieblich gelagert ist, das Maschinenbett wiederum auf einem auf dem Aufstellboden stehendem Maschinenfundament unter Zwischenschaltung von einstellbaren Fixatoren am Aufstellort gelagert ist, wobei das Maschinenfundament am Aufstellungsort auf dem Aufstellboden in einer am Aufstellort bereitgestellten Gussform gegossen wird, und entsprechendes Lagersystem

## Beschreibung

Die Erfindung betrifft ein Verfahren zur Herstellung einer Lagerung von Werkzeugmaschinen nach Anspruch 1 und entsprechendes Lagersystem nach Anspruch 10.

Werkzeugmaschinen benötigen eine möglichst schwingungsisolierte und steife Lagerung. Dazu kann ein aus Beton hergestellter Fundamentblock verwendet werden, der auf den Hallenboden aufgesetzt bzw. in eine entsprechende Grube des Hallenbodens eingesetzt und durch geeignete Dämpfungselemente vom Hallenboden entkoppelt wird. Auf den Fundamentblock wird das Maschinenbett unter Zwischenschaltung von justierbaren Fixatoren befestigt. Eine derartige Maschinenaufstellung erfordert jedoch einen relativ hohen Fertigungs- und Montageaufwand und ist mit entsprechend hohen Kosten verbunden. So muss der Fundamentblock gesondert hergestellt und zum Einsatzort transportiert und ggf. zum Justieren auf den Dämpfungselementen entsprechend angehoben werden.

Alternativ kann auf einen Fundamentblock verzichtet und ein hohles Maschinenbett mit Beton ausgegossen und über geeignete Dämpfungselemente auf den Hallenboden aufgesetzt werden.

EP 0 113 389 A1 offenbart eine Werkzeugmaschine mit einem Maschinenbett, das über Abstützungen auf einem Maschinenfundament aufliegt, welches wiederum auf dem Hallenboden steht.

Aus der EP 1 084 796 A2 ist eine Walzenschleifmaschine mit einem als monolithischer Block ausgeführten Unterteil bekannt, wobei mehrere mit diesem fest verschraubten obere Maschinenbetten vorhanden sind, die zur Halterung der unterschiedlichen Maschinenkomponenten ohne Zwischenschaltung von Fixatoren dienen, vorgesehen sind. Das Unterteil besteht aus einem Epoxidharz-Granit-Verbundwerkstoff und weist je eine untere und obere Stahlplatte auf, wobei die Maschinenkomponenten direkt an der oberen Stahlplatte fixiert werden.

EP 1 683 602 A1 offenbart ein Maschinengestell mit einem Unterteil und einem auf diesem angeordnetes Maschinenbett, die jeweils als mit Rippen verstärkter und mit Beton gefüllter Kasten ausgebildet und über zwischengeschaltete Ausrichteinheiten und Befestigungselemente zu einer ausrichtbaren Einheit mit einer hohen Gesamtsteifigkeit und sehr guten Dämpfungseigenschaften fest miteinander verbunden sind.

Demgegenüber besteht die Aufgabe der vorliegenden Erfindung darin, die Aufstellung und Inbetriebnahme von Werkzeugmaschinen zu vereinfachen und kostengünstiger zu erlauben sowie umweltfreundlicher auszugestalten.

Diese Aufgabe wird durch das in Anspruch 1 wiedergegebene Verfahren und dem Lagersystem nach Anspruch 10 gelöst. Vorteilhafte Ausgestaltungen ergeben sich aus den Unteransprüchen und der Beschreibung.

Erfindungsgemäß ist erkannt worden, dass, wenn zur Herstellung einer Lagerung von Werkzeugmaschinen, wobei die Werkzeugmaschine, insbesondere eine Walzenschleifmaschine, auf einem Maschinenbett verschieblich gelagert ist, das Maschinenbett wiederum auf einem auf dem Aufstellboden stehendem Maschinenfundament unter Zwischenschaltung von einstellbaren Fixatoren am Aufstellort gelagert ist, das Maschinenfundament am Aufstellungsort auf dem Aufstellboden in einer am Aufstellort bereitgestellten Gussform gegossen wird, es möglich ist, Aufwand für Transport und Handling einzusparen.

Bisherige Lösungen beinhalten, besonders bei großen Maschinen, einen hohen Transportaufwand mit entsprechend hohen Kosten. Durch die Herstellung am endgültigen Aufstellungsort entfallen diese. Zudem kann beim Vorort-Gießen ein Selbstnivellierungs-Effekt des Gussmaterials die Anpassung des Maschinenfundaments an die genauen Gegebenheiten unterstützen, was die Montage und genaue Ausrichtung erleichtert.

Mit anderen Worten, das Maschinenfundament zum Tragen des Maschinenbetts und der Werkzeugmaschine wird lokal am Ort der späteren Verwendung gegossen. Dies kann gegebenenfalls auch ohne die Notwendigkeit aufwändiger Grubenarbeiten erfolgen.

Die Gussform kann auf eine Vielzahl von angeordneten und ausgerichteten schwingungsdämpfenden und höheneinstellbaren Tragelementen aufgestellt werden. Dadurch entfällt die Notwendigkeit das Maschinenfundament nach Herstellung nochmal bewegen zu müssen. Die Tragelemente bestehen üblicherweise aus einem unteren auf dem Aufstellboden liegendem weichen Dämpfungsmaterial und einem darauf befestigten einstellbaren Keilschuh zur Höheneinstellung. Damit kann einerseits die Übertragung von Schwingungen auf die Werkzeugmaschine verhindert werden und andererseits können Unebenheiten des Aufstellbodens ausgeglichen werden. Alternativ könnte auch eine der Stellfläche des Maschinenfundaments entsprechende vollflächige weiche Auflagematte entsprechender Stärke verwendet werden. Um dieselben Schwingungsdämpfungseigenschaften zu erreichen, ist diese weicher als das Dämpfungsmaterial der Tragelemente auszubilden. Die Stärke wird derart gewählt, dass diese den Ausgleichsanforderung ebenso genügt.

Die verwendete Gussform kann modular sein und/oder aus mehreren Teilgussformen bestehen, die miteinander vor dem Gießen fixiert werden.

So kann die Gussform z. B. aus mehreren wannenartigen Teil-Gussformen bestehen, die vor Ort verbunden werden, um das gesamte Maschinenfundament abzubilden. Die Teil-Gussformen können an den aneinanderstoßenden Seiten miteinander korrespondierende Öffnungen für den Fluss des Gussmaterials aufweisen.

Wenn die Gussform modular ist, kann die Gussform aus Modulen zusammengesetzt werden, um die gewünschte Maschinenfundamentform zum Gießen bereitzustellen. So können Module z. B. quaderförmige Basiselemente umfassen, die zur endgültigen Form kombiniert und miteinander verbunden werden.

Generell kann die Gussform bzw. Teil-Gussformen nach dem Gießen mindestens teilweise entfernt werden, um wiederverwendet zu werden. Dies gilt nicht für das Bodenelement.

Die Gussform bzw. Teil-Gussformen können auch am fertigen Maschinenfundament verbleiben bzw. Teil dessen werden. So kann z. B. mit fertigen Betonelementen die Gussform erstellt werden und diese werden durch das Ausgießen Teil des Maschinenfundaments. Denkbar ist z. B. der Einsatz von L-Steinen aus Beton, die nebeneinander fixiert Seitenwände und Bodenbereiche der Gussform ausbilden. Gleiches ist auch denkbar mit Beton-Blöcken, die durch das Ausgießen Teil des Maschinenfundaments werden.

Die Gussform und Teil-Gussformen können als Baukasten ausgeführt sein, der eine Vielzahl von miteinander temporär für das Gießen fixierbaren Seitenwandpaneelen oder Seitenwandschalungen und mindestens ein verlorenes, mit den Seitenwandpaneelen bzw. -schalungen verbindbares Bodenelement umfasst, die am Aufstellort zur Gussform oder zu den Teil-Gussformen zusammengesetzt werden. So können Blech- oder Betonelemente zur Herstellung der Seitenwände der Gussform nebeneinander auf dem Bodenelement angeordnet und miteinander sowie mit dem Bodenelement befestigt werden. Auch Steckverbindungen sind dazu einsetzbar, um die Elemente des Baukastens miteinander zu verbinden. So können die Seitenwandpaneele über ein Nut-und-Federprinzip miteinander gesteckt verbunden werden und über Stecknasen in entsprechende Schlitze im Bodenelement eingesteckt werden. Dies erlaubt einen einfachen platzsparenden Transport und eine weitgehende Wiederverwendung sowie eine Konfektionierung der Gussform oder Anpassbarkeit für unterschiedliche Maschinenfundamentgrößen und -formen.

Auch das Bodenelement kann aus mehreren miteinander verbindbaren Teilelementen bestehen. So kann z. B. das Bodenelement ein Bodenblech sein, das ähnlich der Seitenwandpaneele aufgebaut ist. Auch denkbar ist die Verwendung dünner Betonplatten, die miteinander verbunden werden.

Die Gussform kann beim Gießen durch Abstützungen stabilisiert werden. So können die Seitenwandpaneele beim Gießen über Abstützungen gehalten werden. Die Abstützungen können an jedem Seitenwandpaneel angelegt werden bzw. dort an vorhandenen Befestigungsstellen temporär fixiert werden. Die Abstützungen können jeweils ein Vertikalelement zur Anlage am Paneel und ein Schrägelement zur Einleitung der Stützkraft aufweisen, das mit dem Vertikalelement verbunden ist.

Die zuvor genannten Elemente der Gussform können zur Verstärkung mit Rippen, Sicken, wellenförmig, im Schnitt Z-förmig, spundwandartig usw. ausgestaltet sein. Dies betrifft auch das oder die Bodenelemente ganz oder in Teilbereichen.

Vor dem Gießen können mindestens eine Bewehrung und/oder mehrere Platzhalter für die einstellbaren Fixatoren und/oder Leerrohre für spätere Leitungen und/oder Medien in der Gussform positioniert werden.

Die Bewehrung kann ein Stahlgeflecht umfassen. Diese kann auch aus einzelnen sich nach Anordnung überlappenden Modulen bestehen. Die Platzhalter können topfartig ausgebildet sein und ergeben sich aufgrund der späteren Aufnahme der Anker der einzusetzenden Fixatoren. Leerrohre oder Medien können auch in die Gussform vor dem Gießen eingebracht werden, damit diese die spätere Verlegung und/oder den Anschluss der Werkzeugmaschine vereinfachen. Die Leerrohre oder Medien können nach der Bewehrung eingesetzt werden oder als Teil dieser ggf. auch modular eingebracht und soweit notwendig miteinander verbunden werden.

Zum Gießen des Maschinenfundaments wird ein Beton, insbesondere der Klasse C40 oder C45 verwendet. Anstelle des üblichen C20 oder C25 Betons weist dieser ein höheres Elastizitätsmodul auf, so dass mit kleineren Querschnitten eine gleiche Steifigkeit erreichbar ist, was für das Vorort-Gießen vorteilhaft ist. Insbesondere, da hierbei die Bedingungen nicht so kontrolliert wie bei der Vorfertigung im Betrieb sind. Einsetzbar sind auch Polymerbeton oder faserverstärkter Beton. Diese weisen noch höhere Elastizitätsmodule, so dass - je nach Anforderungen - die Querschnitte weiter anpassbar sind.

Ebenfalls einsetzbar ist Spannbeton, wobei die Spannanker in die Gussform integriert werden können. Vorzugsweise erfolgt die Vorspannung in Längsrichtung der Gussform bzw. des späteren Maschinenfundaments.

Nach einem Aushärten des Gusses werden die Fixatoren in die durch die Platzhalter erzeugten Lücken mit Vergussmörtel nach genauer Positionierung fixiert. Die Fixatoren werden zur präzisen Ausrichtung und Anordnung des Maschinenbetts verwendet. Daher sollten diese auch präzise und genau ausgerichtet und in den Platzhaltern angeordnet werden. Daher ist es sinnvoll die präzise Ausrichtung und Anordnung mittels Messeinrichtungen durchzuführen. Anschließend werden die in den Platzhaltern hineinragenden Anker mittels Gießmörtel vergossen und endgültig fixiert.

Die Erfindung umfasst auch ein entsprechend hergestelltes Lagersystem zur Lagerung von Werkzeugmaschinen, wobei die Werkzeugmaschine, insbesondere Walzenschleifmaschine, auf einem Maschinenbett verschieblich gelagert ist, das Maschinenbett wiederum auf einem auf dem Aufstellboden stehendem Maschinenfundament unter Zwischenschaltung von einstellbaren Fixatoren am Aufstellort gelagert ist, wobei das Maschinenfundament am Aufstellungsort auf dem Aufstellboden vor Ort gegossen wurde, wie zuvor beschrieben.

Weitere Details ergeben sich aus der nachfolgenden Beschreibung von Ausführungsbeispielen anhand der Zeichnung, in der
- Fig. 1: eine schematische perspektivische Ansicht einer Walzenschleifmaschine;
- Fig. 2: eine schematische perspektivische Ansicht eines Aufstellbodens bei der Platzierung von Tragelementen auf dem Aufstellboden;
- Fig. 3: eine schematische perspektivische Ansicht eines Aufstellbodens bei der Platzierung einer ersten Teil-Gussformen auf den Tragelementen auf dem Aufstellboden;
- Fig. 4: eine schematische perspektivische Ansicht eines Aufstellbodens bei der Platzierung einer zweiten Teil-Gussformen auf den Tragelementen auf dem Aufstellboden;
- Fig. 5: eine schematische perspektivische Ansicht eines Aufstellbodens bei der Anordnung einer Bewehrung in der aus den zwei Teil-Gussformen gebildeten Gussform;
- Fig. 6: eine schematische perspektivische Ansicht eines Maschinenfundaments nach dem Gießen der Gussform;
- Fig. 7: eine schematische perspektivische Ansicht des Maschinenfundaments nach dem fixieren des Maschinenbetts;
- Fig. 8: eine schematische perspektivische Ansicht einer Ausführungsform mit erhöhter Zugangsplattform;
- Fig. 9: eine schematische perspektivische Ansicht einer Ausführungsform mit abgesenkter Anordnung des Maschinenfundaments;
- Fig. 10: eine schematische perspektivische Ansicht einer modularen Gussform und
- Fig. 11: ein Flussdiagramm eines Verfahrens zur Herstellung einer Lagerung von Werkzeugmaschinen
zeigen.

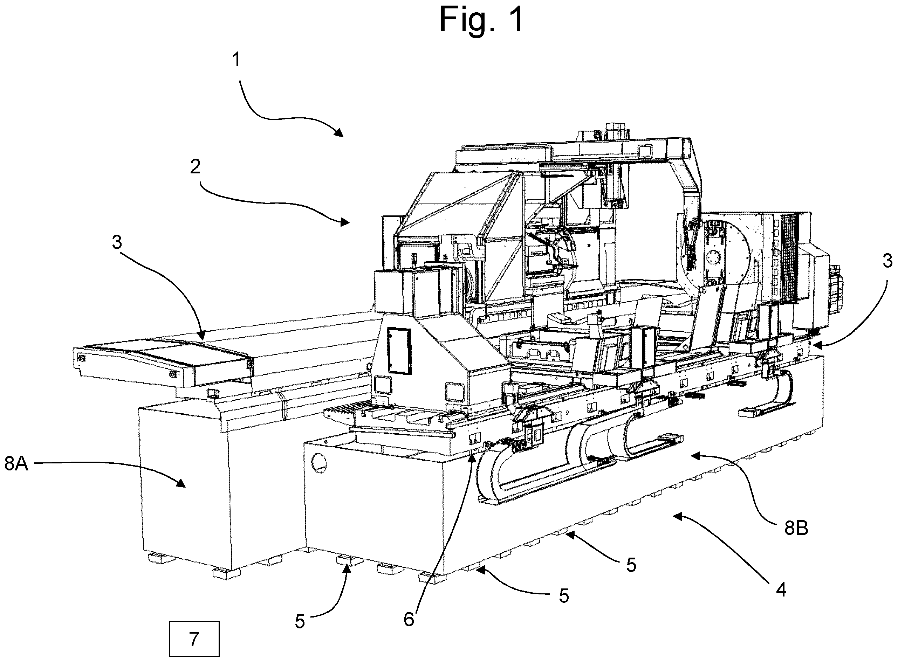

In den Figuren 1 bis 9 ist eine als Ganzes mit 1 bezeichnete Anordnung einer Walzenschleifmaschine 2 auf einem Maschinenbett 3 gezeigt.

Die Walzenschleifmaschine 2 ist auf dem Maschinenbett 3 verschieblich gelagert. Das Maschinenbett 3 ist wiederum auf einem auf dem Aufstellboden 7 stehenden Maschinenfundament 4 unter Zwischenschaltung von einstellbaren Fixatoren 6 am Aufstellort gelagert. Der Aufstellboden 7 ist also der Boden am Ort der Verwendung der Walzenschleifmaschine 2. Somit ist der Aufstellort der Ort der Verwendung der Walzenschleifmaschine 2.

Das Maschinenfundament 4 ist auf einer Vielzahl von angeordneten und ausgerichteten schwingungsdämpfenden und höheneinstellbaren Tragelementen 5 auf dem Aufstellboden 7 aufgestellt.

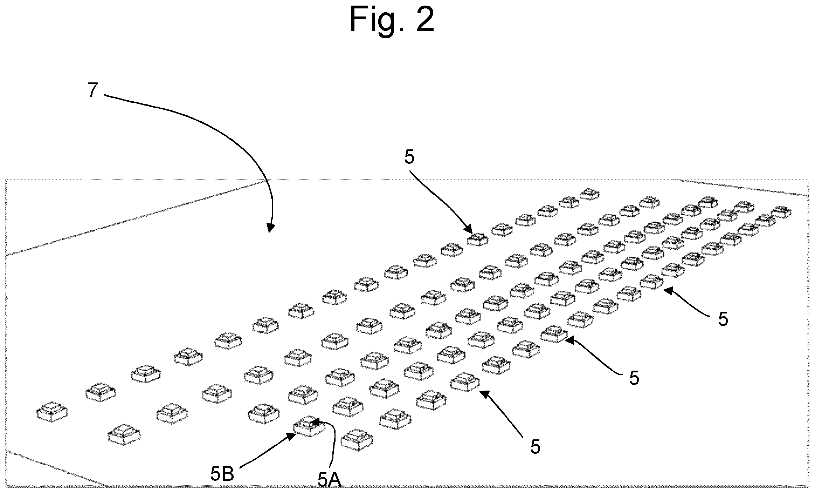

Die Tragelemente 5 weisen jeweils höheneinstellbare Keilschuhe 5A und darunter Gummipads 5B auf. Diese werden derart platziert und ausgerichtet, dass die notwendigen schwingungsdämpfenden Eigenschaften erreicht werden und eine ebene Tragfläche für eine Anordnung einer Gussform 8 bereitgestellt wird (vgl. Figur 2).

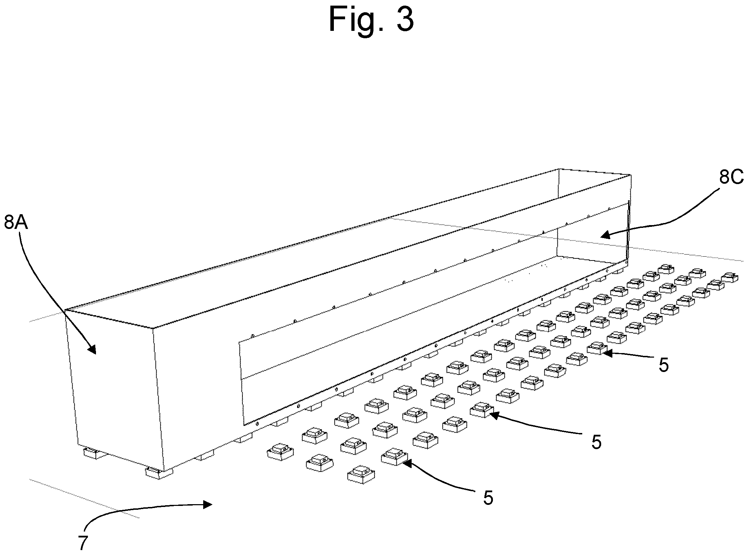

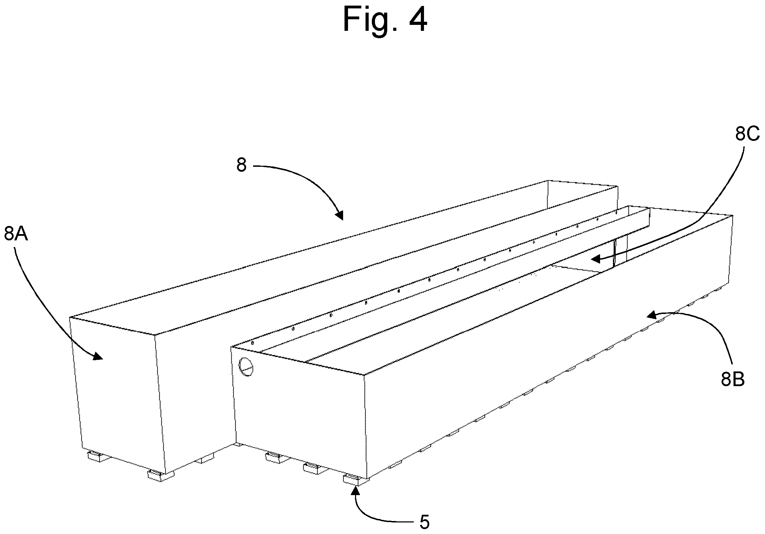

Das Maschinenfundament 4 ist vorliegend in einer am Aufstellungsort auf dem Aufstellboden 7 bereitgestellten Gussform 8 gegossen. Die Gussform 8 besteht vorliegend aus zwei Teil-Gussformen 8A, B, die über einen einander zugewandten Fensterbereich 8C aneinander fixiert und später vergossen werden (vgl. Figur 3 und 4).

Vorliegend verbleibt die Gussform 8 nach dem Gießen am Maschinenfundament 4 (vgl. Figur 1). Alternativ könnten auch die Seitenwandungen der Gussform 8 entfernt werden. Lediglich der Boden der Gussform 8 ist im Prinzip immer verloren, da er nach dem Gießen nicht entfernbar ist, ohne das Maschinenfundament 4 aufwändig zu bewegen.

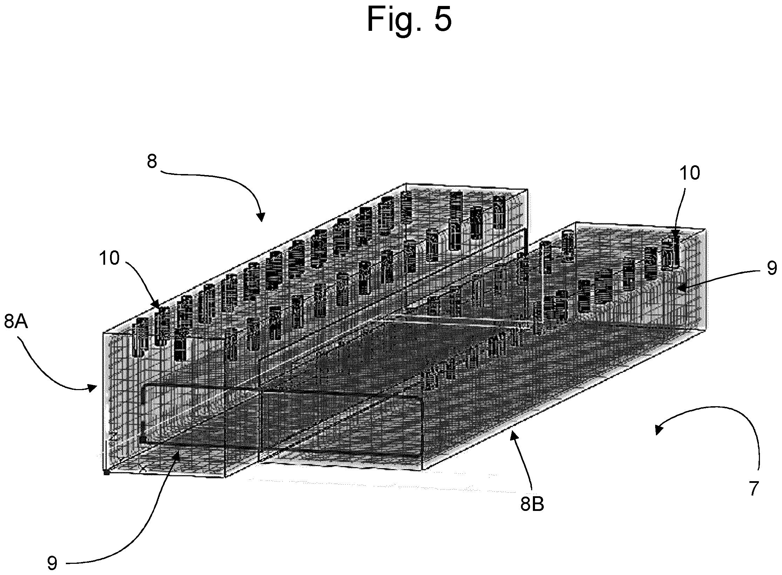

Nach dem ausgerichteten Aufstellen und Verbinden der Teil-Gussformen 8A, B wird eine Stahlgeflecht-Bewehrung 9 mit daran platzierten Platzhaltertöpfen 10 für eine spätere Fixatorenmontage in die Gussform 8 eingebracht und fest ausgerichtet (vgl. Figur 5).

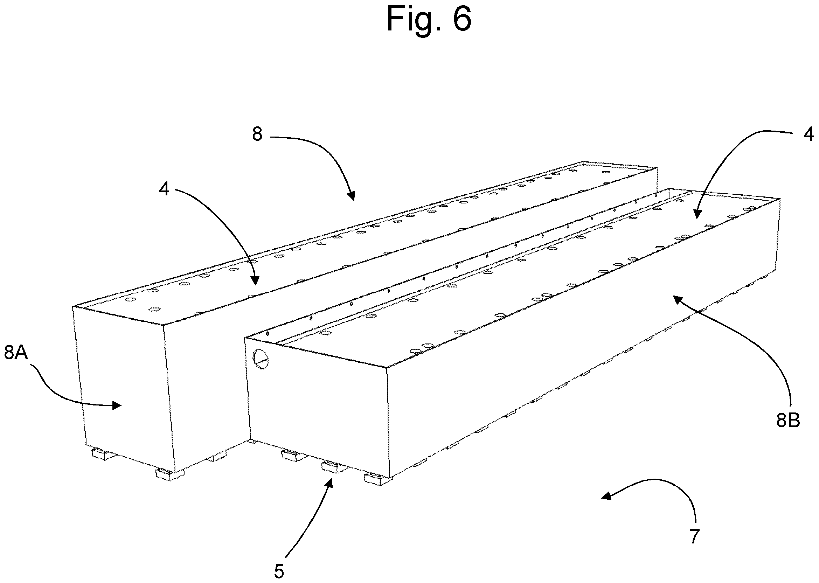

Anschließend erfolgt ein Vergießen der Gussform 8 mit Beton der Klasse C40, wobei die Platzhaltertöpfe 10 naturgemäß leer bleiben und so ein späteres ausgerichtetes Einmörteln der Fixatoren 6 erlaubt (vgl. Figur 6).

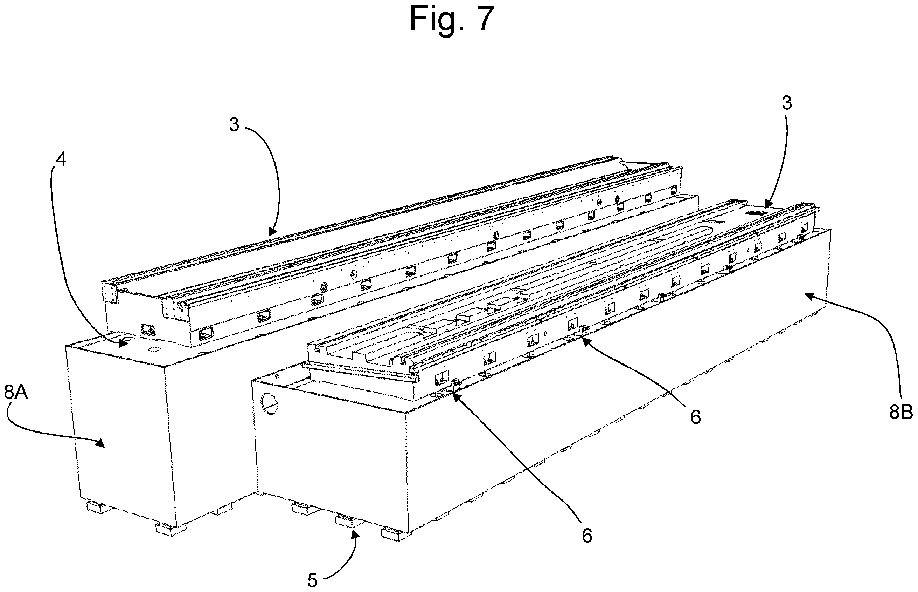

Nach dem Aushärten und der Fixatorenmontage werden die Fixatoren 6 messsystembasiert justiert und das Maschinenbett 3 darauf befestigt (vgl. Figur 7).

Anschließend erfolgt die eigentliche Anordnung und Befestigung der Werkzeugmaschine 2 auf das Maschinenbett 3 (vgl. Figur 1).

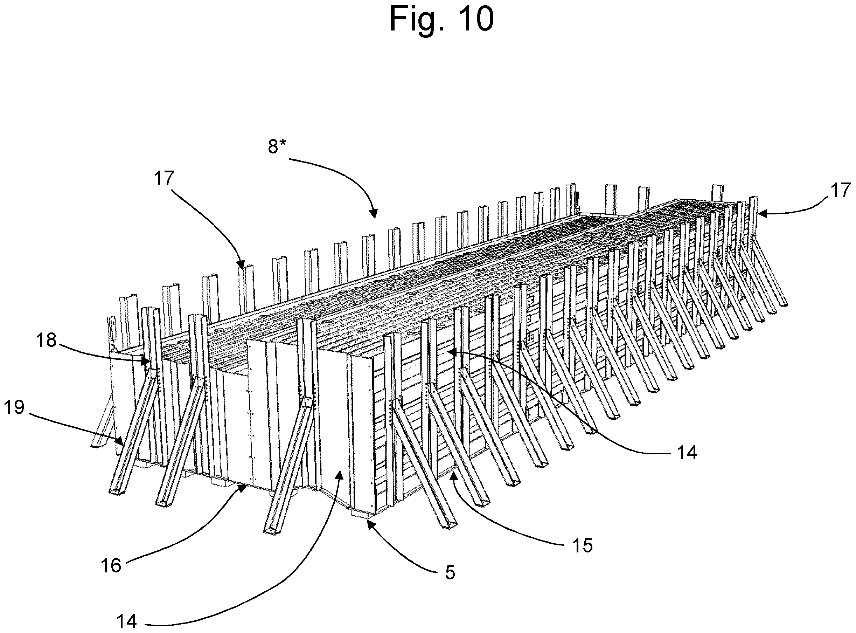

In einer alternativen Ausführung kann, wie aus Figur 10 erkennbar, die Gussform 8* auch durch einen modularen Baukasten 13 ausgeführt sein, der eine Vielzahl von miteinander temporär für das Gießen fixierbaren Seitenwandpaneelen 14 und mindestens ein verlorenes, mit den Seitenwandpaneelen 14 verbindbares Bodenelement 15 umfasst, die am Aufstellort zur Gussform 8* zusammengesetzt werden.

Das Bodenelement 15 besteht ebenfalls aus mehreren miteinander verbindbaren Teilelementen 16.

Die Gussform 8 und Teil-Gussformen 8A, B sind also als Baukasten 13 ausgeführt, der eine Vielzahl von miteinander temporär für das Gießen fixierbaren Seitenwandpaneelen 14 und mindestens ein verlorenes, mit den Seitenwandpaneelen 14 verbindbares Bodenelement 15 bzw. ebenfalls Teilelemente 16 umfasst, die am Aufstellort zusammengesetzt werden. Die Seitenwandpaneele 14 sowie Teilelemente 16 sind zur Verstärkung mit Rippen, Sicken, wellenförmig, im Schnitt Z-förmig, oder spundwandartig ausgestaltet.

Die als Blechelemente ausgeführten Seitenwandpaneele 14 zur Herstellung der Seitenwände der Gussform werden nebeneinander auf dem Bodenelement 15, das wiederum zuvor aus den Teilelementen 16 zusammengesetzt wurde, angeordnet und miteinander sowie mit dem Bodenelement 15 bzw. Teilelementen 16 befestigt. Dies erfolgt vorliegend durch Steckverbindungen. So werden die Seitenwandpaneele 14 über ein Nut-und-Federprinzip miteinander gesteckt verbunden und über Stecknasen in entsprechende Schlitze im Bodenelement 15 eingesteckt.

Die Seitenwandpaneele 14 werden beim Gießen über entfernbare Abstützungen 17 gehalten. Die Abstützungen 17 können an jedem Seitenwandpaneel 14 angelegt werden bzw. dort an vorhandenen Befestigungsstellen (Befestigungsschlitze wie oben angegeben) temporär fixiert werden. Die Abstützungen weisen jeweils ein im Querschnitt U-förmiges Vertikalelement 18 zur Anlage am Seitenwandpaneel 14 und ein Schrägelement 19 zur Einleitung der Stützkraft auf, das mit dem Vertikalelement 18 durch Verbolzen verbunden ist.

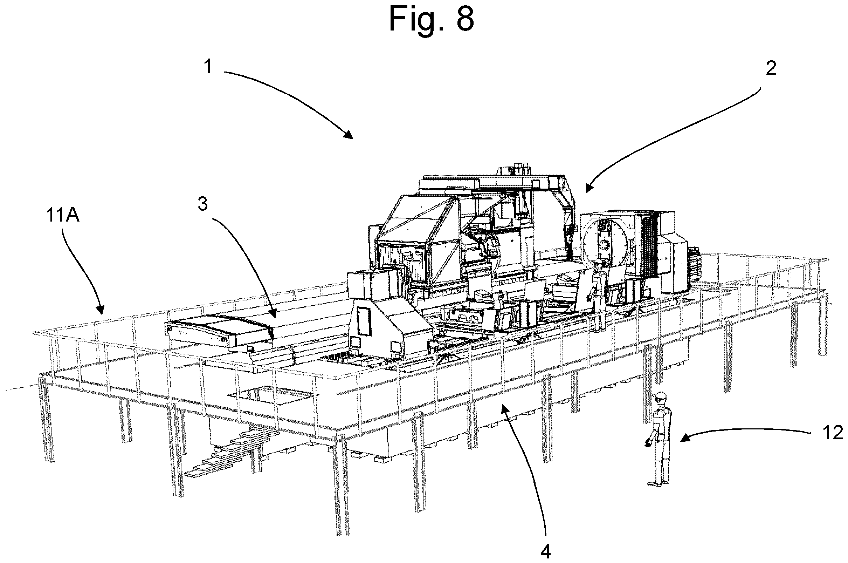

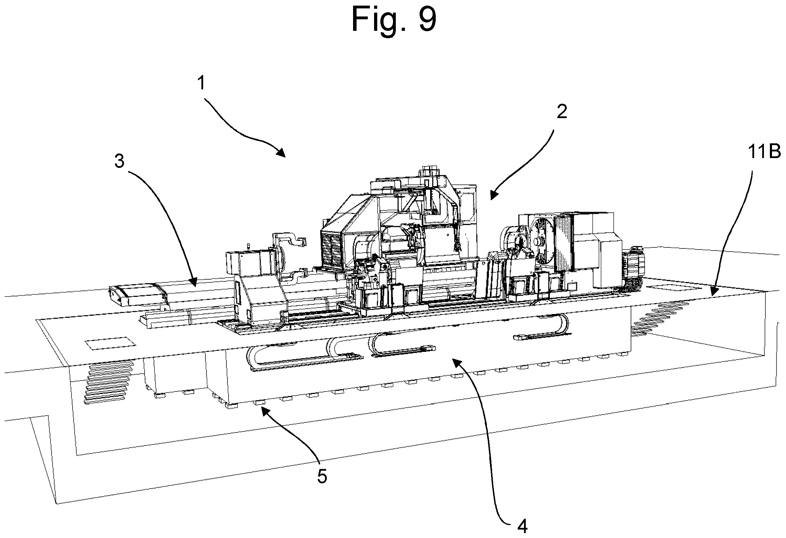

Wie in Figuren 8 und 9 gezeigt, kann der Aufstellort auf dem Aufstellboden 7 einerseits ebenerdig (z. B. auf einem Hallenboden) ausgestaltet sein, so dass eine erhöhte, über Treppen erreichbare Zugangsplattform 11A dem Personal 12 einen Zugang zur Werkzeugmaschine 2 ermöglicht, oder andererseits wannenartig abgesenkt ausgeführt sein, so dass ein ebenerdiger Zugang über eine Zugangsplattform 11B ermöglicht ist, die die Wanne abdeckt.

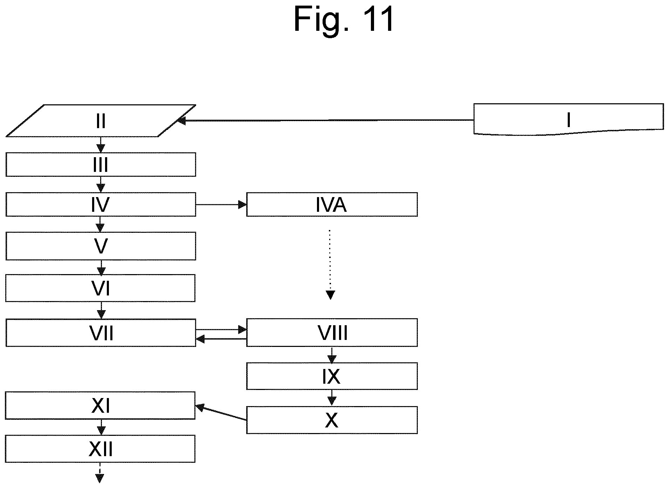

Das Verfahren zur Herstellung einer Lagerung von Werkzeugmaschinen, wobei das Maschinenfundament am Aufstellungsort auf dem Aufstellboden in einer am Aufstellort bereitgestellten Gussform gegossen wird, ergibt sich nochmal anhand des Ablaufdiagramms der Figur 11.

Nach Vorliegen einer Bestellung I der Werkzeugmaschine und dann entsprechender Kenntnis der Maschinenspezifikationen und des Aufstellorts II kann zunächst das Maschinenfundament ausgelegt und berechnet werden III.

Anschließend erfolgt im Schritt IV die Auslegung und Berechnung der Bewehrung. Dies kann dann parallel zum weiteren Verfahren im Schritt IVA extern bzw. lokal in der Nähe des Aufstellorts produziert werden, damit sie rechtzeitig zum Einlegen in die Gussform vorliegt.

Im Schritt V werden dann die Gussformteile hergestellt oder wiederverwendet - je nachdem was möglich oder nötig ist.

Nach dem Transport der Gussformteile an den Aufstellort im Schritt VI wird die eigentliche Gussform durch Aufbringen und Ausrichten der Tragelemente auf dem Aufstellboden am Aufstellort und anschließendem Zusammenbau der Gussformteile im Schritt VII zusammengesetzt. Ebenfalls dann erfolgt das Anbringen der Abstützungen.

Anschließend wird die Bewehrung samt der Platzhaltertöpfe im Schritt VIII eingesetzt und es erfolgt das Gießen des Betons im Schritt IX und nachfolgend das Aushärten im Schritt X.

Das fertige Fundament wird dann im Schritt XI von den Abstützungen und seitlichen Gussformteilen befreit.

Danach erfolgt im Schritt XII die Montage und Ausrichtung der Fixatoren sowie das Anbringen des Maschinenbetts und letztendlich die Montage der Werkzeugmaschine darauf.

Abschließend kann die Abnahme erfolgen und die demontierten Gussformteile und Abstützungen können wiederverwendet werden.

## Patentansprüche

1. Verfahren zur Herstellung einer Lagerung von Werkzeugmaschinen, wobei die Werkzeugmaschine, insbesondere Walzenschleifmaschine, auf einem Maschinenbett verschieblich gelagert ist, das Maschinenbett wiederum auf einem auf dem Aufstellboden stehendem Maschinenfundament unter Zwischenschaltung von einstellbaren Fixatoren am Aufstellort gelagert ist, **dadurch gekennzeichnet, dass** das Maschinenfundament am Aufstellungsort auf dem Aufstellboden in einer am Aufstellort bereitgestellten Gussform gegossen wird.

2. Verfahren nach Anspruch 1, **dadurch gekennzeichnet, dass** die Gussform auf eine Vielzahl von angeordneten und ausgerichteten schwingungsdämpfenden und höheneinstellbaren Tragelementen aufgestellt wird.

3. Verfahren nach Anspruch 1 oder 2, **dadurch gekennzeichnet, dass** die Gussform modular ist und/oder aus mehreren Teil-Gussformen besteht, die miteinander vor dem Gießen fixiert werden.

4. Verfahren nach Anspruch 3, **dadurch gekennzeichnet, dass** die Gussform und Teil-Gussformen als Baukasten ausgeführt sind, der eine Vielzahl von miteinander temporär für das Gießen fixierbaren Seitenwandpaneelen und mindestens ein verlorenes, mit den Seitenwandpaneelen verbindbares Bodenelement umfasst, die am Aufstellort zur Gussform oder zu den Teil-Gussformen zusammengesetzt werden.

5. Verfahren nach Anspruch 4, **dadurch gekennzeichnet, dass** das Bodenelement aus mehreren miteinander verbindbaren Teilelementen besteht.

6. Verfahren nach Anspruch 4 oder 5, **dadurch gekennzeichnet, dass** die Seitenwandpaneele beim Gießen über Abstützungen gehalten werden.

7. Verfahren nach einem der vorhergehenden Ansprüche, **dadurch gekennzeichnet, dass** vor dem Gießen mindestens eine Bewehrung und/oder mehrere Platzhalter für die einstellbaren Fixatoren und/oder Leerrohre für spätere Leitungen und/oder Medien in der Gussform positioniert werden.

8. Verfahren nach einem der vorhergehenden Ansprüche, **dadurch gekennzeichnet, dass** zum Gießen des Maschinenfundaments Beton, insbesondere der Klasse C40 oder 45 verwendet wird.

9. Verfahren nach einem der vorhergehenden Ansprüche, **dadurch gekennzeichnet, dass** nach einem Aushärten des Gusses die Fixatoren in die durch die Platzhalter erzeugten Lücken mit Vergussmörtel nach genauer Positionierung fixiert werden.

10. Lagersystem zur Lagerung von Werkzeugmaschinen, wobei die Werkzeugmaschine, insbesondere Walzenschleifmaschine, auf einem Maschinenbett verschieblich gelagert ist, das Maschinenbett wiederum auf einem auf dem Aufstellboden stehendem Maschinenfundament unter Zwischenschaltung von einstellbaren Fixatoren am Aufstellort gelagert ist, wobei das Maschinenfundament am Aufstellungsort auf dem Aufstellboden nach einem Verfahren nach einem der vorhergehenden Ansprüche hergestellt wird.
